# EUROPÄISCHE PATENTSCHRIFT

(11) **EP 4 260 012 B1**
(45) Veröffentlichungstag und Bekanntmachung des Hinweises auf die Patenterteilung: **16.04.2025**
(21) Anmeldenummer: 21810307.5
(22) Anmeldetag: 09.11.2021
(51) Int. Cl.: G01C 21/34, G01C 21/36, B60W 20/00

(54) **VERFAHREN UND VORRICHTUNG ZUR REICHWEITENKONTROLLE FÜR EIN KRAFTFAHRZEUG MIT EINEM VERBRENNUNGSANTRIEB UND ZUSÄTZLICHEM ELEKTROANTRIEB**
METHOD AND DEVICE FOR CONTROLLING THE RANGE OF A MOTOR VEHICLE HAVING AN INTERNAL COMBUSTION DRIVE AND AN ADDITIONAL ELECTRIC DRIVE
PROCÉDÉ ET DISPOSITIF DE CONTRÔLE DE L'AUTONOMIE D'UN VÉHICULE AUTOMOBILE COMPRENANT UNE PROPULSION PAR MOTEUR À COMBUSTION INTERNE ET UNE PROPULSION ÉLECTRIQUE SUPPLÉMENTAIRE

(30) Priorität: 10.12.2020 DE 102020215679
(43) Veröffentlichungstag der Anmeldung: 18.10.2023
(73) Patentinhaber: Volkswagen Aktiengesellschaft, 38436 Wolfsburg (DE)
(72) Erfinder: WENGELNIK, Heino, 38442 Wolfsburg (DE); STRUHS, Stefan, 38118 Braunschweig (DE); NEUMANN, Markus, 38533 Vordorf (DE)
(86) Internationale Anmeldenummer: PCT/EP2021/081012
(87) Internationale Veröffentlichungsnummer: WO 2022/122276

(56) Entgegenhaltungen:
- EP-A1- 3 173 304
- EP-A1- 3 173 304
- DE-A1- 102007 029 651
- DE-A1- 102007 029 651
- DE-A1- 102017 009 515
- DE-A1- 102017 009 515
- DE-A1- 102019 100 700

## Beschreibung

Die Erfindung betrifft ein Verfahren und eine Vorrichtung zur Reichweitenkontrolle für ein Kraftfahrzeug mit einem Verbrennungsantrieb oder ein Kraftfahrzeug mit zusätzlichem Elektroantrieb. Ferner wird ein Kraftfahrzeug mit einer solchen Vorrichtung beschrieben.

Bei jeder längeren Fahrt mit einem Kraftfahrzeug ergibt sich die Problematik, dass der Fahrer Zwischenstopps einplanen muss, da die Reichweite des Kraftfahrzeugs beschränkt ist. Diese Problematik tritt besonders bei batteriebetriebenen Kraftfahrzeugen auf, da die Reichweite aktuell noch deutlich geringer ist und das Ladestationsnetzwerk eine geringe Dichte aufweist.

Für rein batteriebetriebene Kraftfahrzeuge mit Elektromotor gibt es zahlreiche Reichweitenkontrollsysteme bzw. Reichweitenmanagementsysteme, häufig integriert in Navigationssystemen, in welchen eine Navigationsroute zu einem Navigationsziel über Ladestationen ermittelt werden kann. Diese Information kann über eine graphische Fahrstreckenanzeige mit graphischen Symbolen an den Fahrer übermittelt werden, sodass der Fahrer über Ladestationen als Zwischenstopps geführt und darüber informiert wird. Ferner sind Einstellmöglichkeiten bekannt, über welche der Benutzer eine automatische Einplanung von Ladestationen aktivieren oder deaktivieren kann. Bei weit entfernten Navigationszielen können auch mehrere Ladestationen bei batteriebetriebenen Kraftfahrzeugen eingeplant werden.

Ferner können auf solchen Fahrstreckenanzeigen Informationen wie der aktuelle Ladezustand angezeigt werden. Auch ist bekannt, dass Warnanzeigen für batteriebetriebene Fahrzeuge bereitgestellt sind, wenn das Navigationsziel außerhalb der Reichweite liegt und keine Ladestation gefunden werden kann oder die oben beschriebene Ladestationssuche deaktiviert ist.

In der DE 10 2017 009515 A1 wird ein Verfahren zur Routenplanung für ein Fahrzeug mit Kraftstofftank und Elektroantrieb beschrieben, wobei das Verfahren Zwischenstopps zum Nachladen oder Nachtanken bei festgestellter zu geringer Reichweite anbietet.

In der EP 3 173 304 A1 wird ein Verfahren zur Ermittlung einer optimalen Fahrtroute für ein Hybridfahrzeug beschrieben, wobei nach Eingabe des Zielorts verschiedene Routen ermittelt werden und die ermittelten möglichen Routen zumindest eine erste Route, die für das bevorzugte Nutzen von Tankstellen für den Kraftstoff optimiert ist, und eine zweite Route, die für das bevorzugte Nutzen von Stromtankstellen optimiert ist, umfassen und dem Benutzer als Vorschlag zur Auswahl bereitgestellt werden.

In der DE 10 2007 029651 A1 wird ein Navigationssystem offenbart, in welchem eine Anzeige beschrieben wird, in der ein Startwegpunkt, ein Zielwegpunkt und ein oder mehrere Wegpunkte zwischen Startwegpunkt und Zielwegpunkt dargestellt werden.

In der DE 10 2019 204 217 A1 wird ein Verfahren zum Anzeigen der Reichweite für ein Kraftfahrzeug mit einer Batterie beschrieben. Dabei wird in dem Verfahren eine minimale und eine maximale Reichweite auf Basis eines Ladezustands der Batterie ermittelt und in einer graphischen Darstellung visualisiert. Dabei wird ein veränderbares, graphisches Reichweitenobjekt erzeugt, welches sich von dem Fahrzeugobjekt in Richtung des Zielobjekts erstreckt, wobei das graphische Reichweitenobjekt wenigstens einen ersten Abschnitt, der sich von dem Fahrzeugobjekt bis zu einem die minimale Reichweite repräsentierenden Bereich des Reichweitenobjektes erstreckt, und einen zweiten Abschnitt, der sich vom ersten Abschnitt bis zu einem die maximale Reichweite repräsentierenden Ende des Reichweitenobjektes erstreckt, umfasst.

In der DE 10 2019 100 700 A1 wird die Anzeige einer Zeitachse offenbart, welche vorausliegende Vorkommnisse von Tankstellen und/oder EV-Ladestationen auf einer eingestellten Route angibt.

Für konventionelle Kraftfahrzeuge mit Kraftstofftank und für Hybrid-Kraftfahrzeuge, insbesondere Plug-In-Hybride, treten jedoch ebenfalls Reichweitenprobleme auf. Auch in solchen Fällen muss der Fahrer bzw. Benutzer die beschränkte Reichweite berücksichtigen und seine Navigationsroute nach Zwischenstopps ausrichten. Ein vergleichbares Reichweitenmanagement für beide genannten Fahrzeugtypen ist bisher jedoch nicht bekannt. Bei Kraftfahrzeugen mit nur einem Verbrennungsantrieb werden bisher Anzeigen für den Benutzer bereitgestellt, welche lediglich Tankstellenobjekte als Wegpunkte neben der Navigationsroute anzeigen, sodass der Fahrer über die Präsenz einer Tankstelle in einer gewissen Umgebung der bestimmten Navigationsroute informiert und diese grundsätzlich auffinden kann.

Bei Hybrid-Kraftfahrzeugen kommt zusätzlich die Problematik hinzu, dass der Batterieanteil im Betrieb im Mittel zu gering ist, d.h. es wird in der Praxis zu wenig elektrisch gefahren.

Der Erfindung liegt nun die Aufgabe zugrunde, ein Reichweitenmanagement für Kraftfahrzeuge mit Verbrennungsantrieb oder zusätzlichem Elektroantrieb bereitzustellen, welche unter Anderem geeignet ist, die Reichweitenkontrolle für den Fahrer zu erleichtern, den elektrischen Fahranteil zu erhöhen und Informationen intuitiv und eingängig an den Fahrer bzw. Benutzer zum Betrieb des Kraftfahrzeugs zu übermitteln.

Die Erfindung ist gemäß den angehängten Ansprüchen definiert. Die Erfindung betrifft ein Verfahren zur Reichweitenkontrolle gemäß den Ansprüchen 1 und 4.

Reichweitenkontrolle ist mit anderen Worten ein Reichweitenmanagement. Ein Kraftstoff kann beispielsweise Diesel, Benzin oder Wasserstoff sein, wobei die Erfindung nicht darauf beschränkt ist. Entsprechend kann ein Kraftstofftank ein Tank für Diesel, Benzin oder Wasserstoff sein. Ein solches Kraftfahrzeug kann demnach mit anderen Worten ein Verbrennerfahrzeug oder ein Hybrid-Fahrzeug sein, insbesondere ein Mild-Hybrid-Kraftfahrzeug (MHEV). Die Bestimmung der Reichweite kann beispielsweise weiterhin auf Basis des Kraftstoffverbrauchs erfolgen, um einen aktuellen und präzisen Wert zu erhalten. Die Reichweite ist somit ebenfalls anpassbar, d. h. insbesondere kann die Reichweite bei variierendem Verbrauch neu berechnet werden. Die Bestimmung der Tankstelle kann dabei basierend auf einer Marke und/oder nach dem Kraftstoffpreis erfolgen. Andernfalls kann diese auch auf Basis von Verpflegungsmöglichkeiten an der Tankstelle erfolgen, bspw. Essmöglichkeiten. Das Ermitteln des Tankzwischenstopps kann bevorzugt erst dann erfolgen, wenn die erste Reichweite geringer ist als eine Strecke zum Navigationsziel. Die Berücksichtigung eines Tankzwischenstopps erfolgt somit nur, wenn die Strecke länger ist als die Reichweite. Erst dann ist eine Navigationsroute über den Tankzwischenstopp erforderlich. Jedoch kann auch eine Restreichweite gefordert sein. Es ist ferner hier und im Folgenden klar, dass sich bei Einbeziehung von Zwischenstopps die bestimmte Navigationsroute im Allgemeinen ändert. Die Navigationsroute kann hier und in den weiteren Ausführungen zeitkontinuierlich oder in bestimmten Zeitschritten neu bestimmt werden.

Durch die Erfindung wird für Kraftfahrzeuge mit Verbrennungsmotor eine automatische Einbeziehung von Tankstellen und somit eine integrierte Reichweitenkontrolle bei der Bestimmung der Navigationsroute bereitgestellt. Hierbei können auch mehrere Tankzwischenstopps bei zum Beispiel längeren Strecken einbezogen werden. Es wird somit ein Mehrstopp-Routing für Kraftfahrzeuge mit Verbrennungsmotor realisiert. Der Benutzer muss somit nicht selber Tankstopps vorplanen.

Weitere bevorzugte Ausgestaltungen der Erfindung ergeben sich aus den übrigen, in den Unteransprüchen genannten Merkmalen.

Das Kraftfahrzeug umfasst ferner einen Elektroantrieb. Das Kraftfahrzeug kann somit ein Plug-In-Hybrid sein. Insbesondere für solche Kraftfahrzeuge ist ein Mehrstopp-Routing von Vorteil.

Das Verfahren umfasst das Bestimmen der ersten Navigationsroute zum Navigationsziel nur über den mindestens einen ermittelten Tankzwischenstopp. Nur bedeutet in diesem Zusammenhang und bei ähnlichen Fällen, dass Tankzwischenstopps verwendet werden aber keine Ladezwischenstopps. Dadurch wird ein reines Kraftstoff-basiertes Mehrstopp-Routing bereitgestellt. Dies ist insbesondere für Kraftfahrzeuge mit einem ausschließlichen Verbrennungsantrieb von Bedeutung, aber auch für Plug-In-Hybride als Einstelloption anwendbar. Eine solche Navigationsroute ist besonders schnell und somit zeiteffizient. Ein solcher Betriebsmodus, in welchem nur Tankzwischenstopps einbezogen werden, kann auch in Antwort auf das Erfassen einer Einstellung durch den Benutzer ausgeführt werden.

Das Verfahren umfasst ferner das Bestimmen einer zweiten Reichweite auf Basis eines Ladezustands einer Batterie des Elektroantriebs und das Ermitteln mindestens eines Ladezwischenstopps basierend auf der zweiten Reichweite und der Strecke zum Navigationsziel. Das Ermitteln der Ladestation kann bevorzugt erst dann erfolgen, wenn die zweite Reichweite geringer ist als eine Strecke zum Navigationsziel. Ferner kann eine Restreichweite gefordert sein. Die Bestimmung der zweiten Reichweite kann beispielsweise weiterhin auf Basis des Batterieverbrauchs erfolgen, um einen aktuellen und präzisen Wert zu erhalten. Die Reichweite ist somit ebenfalls anpassbar, d. h. insbesondere kann die zweite Reichweite auch bei variierendem Verbrauch neu berechnet werden. Eine Ladestation ist mit anderen Worten eine Ladesäule. Durch das automatische Ermitteln der Ladezwischenstopps kann der elektrische Fahranteil von Plug-In-Hybriden erhöht werden.

Bevorzugt umfasst das Verfahren das Bestimmen der ersten Navigationsroute zum Navigationsziel über den mindestens einen ermittelten Tankzwischenstopp und ferner über den mindestens einen ermittelten Ladezwischenstopp, was nicht von den Ansprüchen abgedeckt ist. Dadurch wird dem Benutzer eine gemischte Navigationsroute mit Tankstellen und Ladestationen bereitgestellt. Die berechnete neue Navigationsroute umfasst somit sowohl Ladestationen als auch Tankstationen. Dadurch kann für Plug-In-Hybride eine Fahrt bereitgestellt werden, bei welcher die Batterie automatisch stets geladen ist. Dadurch kann ein ökologischer Betrieb mit höherem elektrischem Anteil erzielt werden.

In einer bevorzugten Ausführungsform, welche nicht von den Ansprüchen abgedeckt ist, umfasst das Verfahren das Bestimmen der ersten Navigationsroute über den mindestens einen ermittelten Tankzwischenstopp und einem Ladezwischenstopp derart, dass der Ladezwischenstopp der letzte Zwischenstopp der ersten Navigationsroute vor dem Navigationsziel ist. Durch diese Berechnung der Navigationsroute wird sichergestellt, dass vor Ankunft, d.h. zum Beispiel nahe der Heimadresse bzw. des eingegebenen Navigationsziels, die Batterie wieder geladen ist. Dadurch kann für Folgefahrten, zum Beispiel kurze Fahrten, der elektrische Anteil für Plug-In-Hybride erhöht werden.

Bevorzugt umfasst das Verfahren ferner das Erfassen einer Benutzereingabe indikativ für eine Auswahl eines Tankzwischenstopps oder eines Ladezwischenstopps als nächsten Zwischenstopp, und das Bestimmen der ersten Navigationsroute über den mindestens einen ermittelten Tankzwischenstopp und des erfassten Tankzwischenstopp oder Ladezwischenstopp als nächsten Zwischenstopp. Dadurch kann der Benutzer aktiv und situativ in die Berechnung der Navigationsroute nach seinem Ermessen eingreifen. Bei Auswahl eines nächsten Ladezwischenstopps kann auch hier der elektrische Fahranteil erhöht werden durch die Neuberechnung der Route über einen nächstgelegenen Ladezwischenstopp.

Ferner umfasst das Verfahren das Darstellen einer ersten graphischen Fahrstreckenanzeige auf einem Display mit einem graphischen Fahrzeugobjekt und einem graphischen Zielobjekt sowie mindestens einem graphischen Tankstellenobjekt indikativ für den bestimmten Tankzwischenstopp auf einem graphischen Pfad zwischen dem graphischen Fahrzeugobjekt und dem graphischen Zielobjekt. Ein Display ist mit anderen Worten eine graphische Anzeigevorrichtung. Eine Fahrstreckenanzeige kann beispielsweise in Form eines graphischen Balkens, insbesondere eines linearen Balkens mit einem darauf dargestellten linearen graphischen Pfad erfolgen. Der graphische Pfad muss nicht eine Markierung sein, sondern kann sich auch aus der Anordnung der Objekte ergeben. Eine solche Fahrstreckenanzeige kann neben einer graphischen Karte, bzw. Navigationskarte, auf dem Display einer Vorrichtung, insbesondere einer Navigationsvorrichtung, dargestellt werden. Die dargestellten Objekte sind jeweils indikativ für Fahrzeug, Navigationsziel, Tankzwischenstopp etc. Die Darstellung kann bevorzugt maßstabsgetreu erfolgen. Die Fahrstreckenanzeige ermöglicht es ferner, dem Fahrer in übersichtlicher Weise diese Information zu vermitteln, sodass der Benutzer über Zeitpunkt und Abstand des Tankzwischenstopps informiert werden kann. Eine solche Anzeige verbessert die Wahrnehmung der Fahrstreckenführung für den Fahrer eines Kraftfahrzeugs mit Verbrennungsmotor während der Fahrt. In weiteren Ausführungsformen der Erfindung können auch Ladestationsobjekte indikativ für einen oder mehrere bestimmte Ladestationen auf dem graphischen Pfad dargestellt werden.

Das Verfahren umfasst das Bestimmen einer zweiten Navigationsroute zum Navigationsziel nur über mindestens einen ermittelten Ladezwischenstopp. Dadurch wird für einen Fahrer eines Plug-In-Hybrides stets eine Navigationsroute bereitgestellt bzw. berechnet, welche mit höherem Anteil elektrisch betrieben werden kann. Dadurch kann der elektrische Anteil des Plug-in-Hybrids effektiv erhöht werden, wenn eine solche ökologische Route verwendet wird. Nur bedeutet in diesem Zusammenhang und bei ähnlichen Fällen, dass Ladezwischenstopps verwendet werden aber keine Tankstopps. Somit kann in Alternative eine rein auf elektrischen Antrieb basierte Navigationsroute bereitgestellt werden. Das Hybrid-Fahrzeug kann somit auf einer solchen Route in einem elektrischen Modus betrieben werden.

Gemäß einem Aspekt der Erfindung umfasst das Verfahren, in Antwort auf das Erfassen einer Navigationsroutenauswahl aus der ersten und zweiten Navigationsroute des Benutzers, das Anzeigen nur einer der ersten und einer zweiten Fahrstreckenanzeige, welche zu der ausgewählten Navigationsroute korrespondiert, wobei die zweite graphische Fahrstreckenanzeige mindestens ein graphisches Ladestationsobjekt indikativ für den Ladezwischenstopp auf dem graphischen Pfad zwischen dem graphischen Zielobjekt und dem Fahrzeugobjekt umfasst. Der Fahrer bzw. Benutzer kann somit von Navigationsroute zu Navigationsroute wechseln und dabei stets die passende Fahrstreckenanzeige sichten. Es wird somit entweder die erste Fahrstreckenanzeige oder die zweite Fahrstreckenanzeige dargestellt. Ferner wird dabei die an den Benutzer angezeigte Information dosiert, sodass nur die für die gewählte Route relevante Information an den Benutzer vermittelt wird. Vorteilhaft kann auch die Kartenansicht in diesem Fall automatisch gewechselt werden auf Basis der Navigationsroutenauswahl. Der Fahrer kann so zwischen einer zeiteffizienten und einer ökologischen Route wechseln.

Gemäß einem weiteren Aspekt der Erfindung umfasst das Verfahren das gemeinsame Darstellen der ersten Fahrstreckenanzeige und einer zweiten Fahrstreckenanzeige, wobei die zweite graphische Fahrstreckenanzeige mindestens ein graphisches Ladestationsobjekt indikativ für den Ladezwischenstopp auf dem graphischen Pfad zwischen dem graphischen Zielobjekt und dem Fahrzeugobjekt umfasst. Dadurch wird dem Fahrer/Benutzer die Möglichkeit gegeben, die beiden berechneten Routen miteinander zu vergleichen. Insbesondere kann somit basierend auf der Information der Fahrstreckenanzeigen die Navigationsroute gewählt bzw. gewechselt werden. Beispielsweise kann sich der Fahrer für eine gute Navigationsroute mit Ladestationen, d.h. nur geringfügig langsamere Route mit Ladestationen, entscheiden, um den elektrischen Anteil im Betrieb zu erhöhen.

Das Verfahren umfasst ferner, in Antwort auf das Erfassen der Navigationsroutenauswahl aus der ersten und zweiten Navigationsroute des Benutzers, das Anzeigen nur einer Kartenansicht auf dem Display, welche zu der ausgewählten Navigationsroute korrespondiert. Dadurch kann trotz Anzeigen beider Fahrstreckenanzeigen nur diejenige Kartenansicht gezeigt werden, welche zu der ausgewählten Navigationsroute zugehörig ist. Dadurch wird stets die passende Karte gezeigt, jedoch die Möglichkeit des Wechselns zu einer anderen Navigationsroute ermöglicht. Das Verfahren ist somit intuitiv und flexibel.

In einer bevorzugten Ausführungsform der Erfindung umfasst das Verfahren das Aktivieren eines Markierfeldes aus der Gruppe eines ersten und eines zweiten Markierfelds, welches auf der ausgewählten Fahrstreckenanzeige positioniert oder dieser zugeordnet ist. Durch das Markieren wird sichergestellt, dass der Benutzer stets Kenntnis darüber besitzt, welche der beiden angezeigten Navigationsrouten auf der Karte angezeigt ist.

Bevorzugt umfasst das Verfahren das Bestimmen einer Fahrtzeit zum Navigationsziel auf Basis der reinen Fahrtzeit sowie einer Tankzeit und/oder Ladezeit an dem mindestens einen Tankzwischenstopp und/oder mindestens einen Ladezwischenstopp, und Darstellen einer resultierenden Fahrtzeit neben oder auf der ersten und/oder zweiten Fahrstreckenanzeige. Dadurch kann für jede Route eine absolute Fahrzeit angegeben werden, welche auch die Verlustzeit beim Aufladen/Tanken involviert. Diese Information kann insbesondere hilfreich bei der Auswahl der Navigationsrouten sein.

In einer bevorzugten Ausführungsform umfasst das Verfahren das Ermitteln der Tankzeit und/oder Ladezeit auf Basis der Belegung an der Tankstelle und/oder der Ladesäule oder durch Bereitstellen einer vorgegebenen Zeitkonstante. Die Zeitkonstante beim Tanken kann beispielsweise 10 Minuten betragen. Bei Ladesäulen kann eine andere, zum Beispiel längere, Zeitkonstante gewählt werden. Beispielsweise kann durch erhaltene Information über die Belegung eine reale Tankzeit oder reale Ladezeit bestimmt werden. Dadurch kann der Benutzer insbesondere bei der Wahl der Navigationsroute in eine bessere Entscheidungslage versetzt werden. Zudem kann die voraussichtliche Ankunftszeit besser geplant werden.

In einem weiteren Aspekt der Erfindung wird eine Vorrichtung zur Reichweitenkontrolle für ein Kraftfahrzeug mit einem Kraftstofftank bereitgestellt, wobei die Vorrichtung dazu eingerichtet ist, das Verfahren gemäß einer der obigen Ausführungsformen auszuführen. Die Vorrichtung ist bevorzugt eine Navigationsvorrichtung. Die Navigationsvorrichtung hat dabei insbesondere eine Steuereinheit, um die einzelnen Schritte des erfindungsgemäßen Verfahrens auszuführen.

Ferner wird ein Kraftfahrzeug mit einem Verbrennungsantrieb beschrieben, umfassend eine Vorrichtung zur Reichweitenkontrolle nach einer der erfindungsgemäßen Ausführungsformen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Kraftfahrzeug und eine Vorrichtung zur Reichweitenkontrolle nach einer Ausführungsform der Erfindung;
- Figur 2: eine Illustration des Verfahrens zur Reichweitenkontrolle gemäß einer ersten Ausführungsform der Erfindung;
- Figur 3: eine Illustration des Verfahrens zur Reichweitenkontrolle gemäß einer zweiten Ausführungsform der Erfindung, welche nicht von den Ansprüchen abgedeckt ist;
- Figur 4: eine Illustration des Verfahrens zur Reichweitenkontrolle gemäß einer dritten Ausführungsform der Erfindung, welche nicht von den Ansprüchen abgedeckt ist;
- Figur 5: eine Illustration des Verfahrens zur Reichweitenkontrolle gemäß einer vierten Ausführungsform der Erfindung;
- Figur 6: eine Illustration des Verfahrens zur Reichweitenkontrolle gemäß einer fünften Ausführungsform der Erfindung; und
- Figur 7: eine Illustration des Verfahrens zur Reichweitenkontrolle gemäß einer sechsten Ausführungsform der Erfindung.

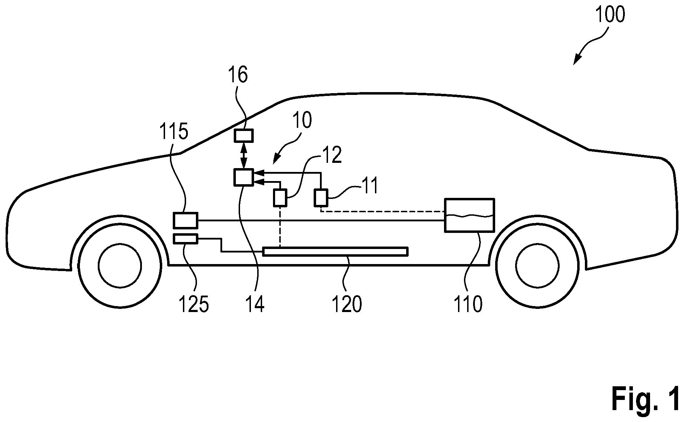

Figur 1 zeigt ein Kraftfahrzeug 100 und eine Vorrichtung 10 zur Reichweitenkontrolle. Die Vorrichtung 10 zur Reichweitenkontrolle ist hierbei beispielhaft in dem Kraftfahrzeug 100 bereitgestellt, bevorzugt integriert. Das Kraftfahrzeug 100 umfasst einen Verbrennungsantrieb.

Ferner ist ein Kraftstofftank 110 für den Verbrennungsantrieb zur Verfügung gestellt. Ferner kann ein Verbrennungsmotor 115, beziehungsweise eine Verbrennungsmaschine, bereitgestellt sein. In der Figur 1 sind diese Bestandteile lediglich schematisch beschrieben. Der Kraftstofftank 110 kann dabei für Wasserstoff, Benzin, Diesel, Erdgas oder auch andere Kraftstoffe ausgelegt sein. Das Kraftfahrzeug 100 kann somit in einer ersten Ausführungsform ein reines Verbrennerfahrzeug sein ohne zusätzlichen Elektroantrieb.

In weiteren Ausführungsformen kann das Kraftfahrzeug 100, wie abgebildet, zusätzlich einen Elektroantrieb umfassen. Dazu kann eine Batterie 120 für den Elektroantrieb bereitgestellt werden. Ferner ist schematisch ein Elektromotor 125, bzw. eine Elektromaschine, vorgesehen. In bevorzugten Ausführungsformen, wie weiter unten beschrieben, ist diese Batterie 120 über eine Ladestation ladbar. Das Kraftfahrzeug 100 kann somit ein Plug-In-Hybrid sein. In anderen Ausführungsformen kann das Kraftfahrzeug 100 ein Mild-Hybrid sein.

Das Kraftfahrzeug umfasst ferner Sensoren 11, 12, bzw. eine Sensorgruppe oder eine Sensorik, um Reichweiten des Kraftfahrzeugs zu bestimmen. Beispielsweise kann ein erster Sensor 11 dazu eingerichtet sein, die Kraftstoffmenge im Kraftstofftank 110 zu ermitteln. Ferner können weitere Größen gemessen werden, welche der Reichweitenbestimmung für den Kraftstoff dienen, insbesondere ein aktueller Kraftstoffverbrauch.

Beispielsweise, wenn eine Batterie 120 vorhanden ist, kann ein zweiter Sensor 12 dazu eingerichtet sein, den Ladezustand der Batterie 120 zu ermitteln. Ferner können weitere Größen gemessen werden, welche der Reichweitenbestimmung der Batterie 120 dienen, insbesondere eine aktuelle Entladegeschwindigkeit.

Die Vorrichtung 10 zur Reichweitenkontrolle kann die ermittelten Sensorwerte durch Übertragung von den Sensoren 11, 12 erhalten. Mittels einer Steuereinheit 14 können diese Sensorwerte verwendet werden, um daraus eine erste Reichweite des Kraftstoffanteils und/oder eine zweite Reichweite der Batterie zu bestimmen, was weiter unten näher ausgeführt wird. Die Steuereinheit 14 der Vorrichtung 10 ist ferner dazu eingerichtet, Navigationsrouten wie in den unteren Ausführungsformen beschrieben, zu bestimmen. Für diese Bestimmung können entsprechende digitale Karten und hinterlegte Navigationsdaten bereitgestellt werden, auf welche die Steuereinheit 14 zurückgreift.

Die Steuereinheit 14 ist ferner dazu eingerichtet, ein Display 16 zu steuern. Das Display 16, auch Anzeigeeinrichtung genannt, übermittelt die bestimmte Navigationsroute und weitere Informationen graphisch auf einem Bildschirm an den Fahrer.

Ferner umfasst die Vorrichtung 10 Schnittstellen, damit Eingaben des Benutzers von der Steuereinheit 14 erfasst werden können. Beispielsweise kann diese Schnittstelle durch ein berührungssensitives Display 16 realisiert werden, wobei die Erfindung nicht darauf beschränkt ist. Die Steuereinheit 14 ist ferner dazu eingerichtet, die im Folgenden beschriebenen Ausführungsformen der Verfahren zur Reichweitenkontrolle auszuführen. Diese Verfahren werden nun näher beschrieben.

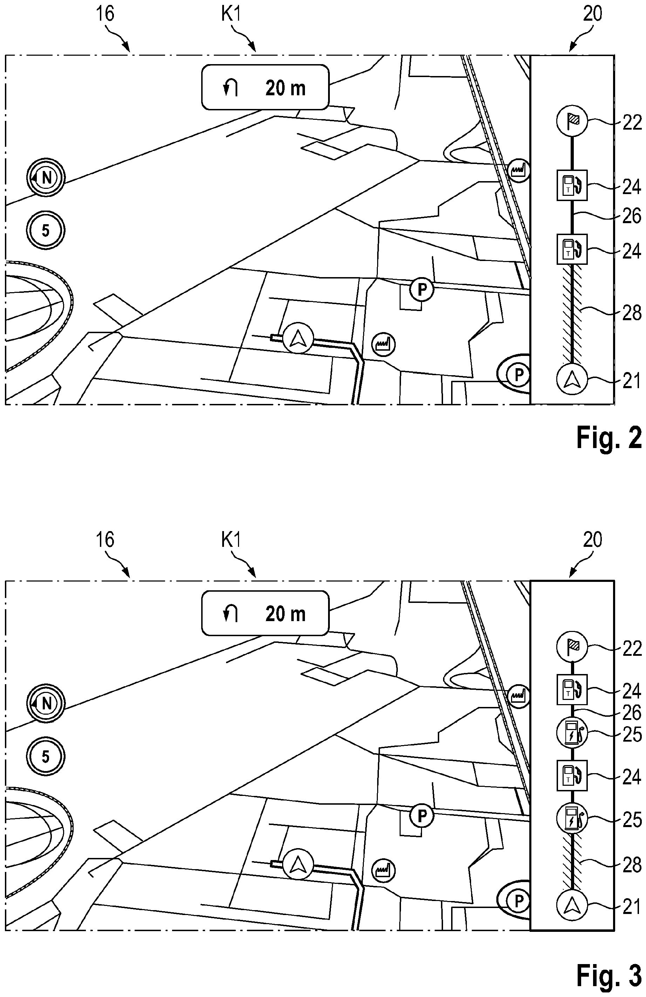

Figur 2 illustriert das Verfahren zur Reichweitenkontrolle nach einer ersten Ausführungsform. In einem ersten Schritt erfolgt das Erfassen eines Navigationsziels. Dies kann durch eine Eingabe des Benutzers über eine oben beschriebene Schnittstelle erfolgen. Danach wird eine erste Reichweite auf Basis der Kraftstoffmenge bestimmt. Hierbei kann, wie zuvor beschrieben, auch der aktuelle Kraftstoffverbrauch hinzugezogen werden. Basierend auf der ersten Reichweite und der Strecke zum Navigationsziel kann dann mindestens ein Tankzwischenstopp ermittelt werden. Dies erfolgt bevorzugt, wenn die erste Reichweite geringer ist als die Strecke zum Navigationsziel. Ferner wird dann eine erste Navigationsroute zum Navigationsziel über den mindestens einen ermittelten Tankzwischenstopp bestimmt. Der ermittelte Tankzwischenstopp ist somit ein Teil der ersten Navigationsroute. Diese Schritte können durch die in Figur 1 beschriebene Steuereinheit 14 ausgeführt werden. Durch die Berücksichtigung der Tankstopps wird eine automatische Routenplanung mit in der Navigationsplanung integrierten Tankstopps bereitgestellt. Es wird somit ein Mehrstopp-Routing für Kraftfahrzeuge mit Verbrennungsantrieb realisiert. Dadurch wird das Tanken vorteilhaft ein Teil der Routenplanung selbst und muss nicht vom Benutzer separat erarbeitet werden.

In einem weiteren Schritt kann, wie in Figur 2 beispielhaft gezeigt, eine erste graphische Fahrstreckenanzeige 20 auf dem Display 16 dargestellt werden. Die erste Fahrstreckenanzeige 20 kann dabei als ein graphischer Balken ausgebildet sein. Die Fahrstreckenanzeige kann auch als Reichweitenanzeige bezeichnet werden. Die graphische Fahrstreckenanzeige 20 wird dabei beispielsweise am Rand des Displays 16 dargestellt, beispielsweise gemeinsam mit einer ersten Kartenansicht K1 der bestimmten ersten Navigationsroute. In anderen Ausführungen kann in Antwort auf das Erfassen einer Benutzerauswahl in eine Detailansicht gewechselt werden, in welcher die erste Fahrstreckenanzeige 20 gemeinsam mit Navigationsrouteninformationen dargestellt werden, beispielsweise Fahrinstruktionen oder Distanzinformationen für erforderliche Fahrmanöver, um der bestimmten Navigationsroute zu folgen.

Die Fahrstreckenanzeige 20 kann dabei ein graphisches Fahrzeugobjekt 21 umfassen, welches indikativ ist für das Kraftfahrzeug 100. Das graphische Fahrzeugobjekt 21 stellt dabei eine IstPosition des Kraftfahrzeugs 100 dar. Ferner ist ein graphisches Zielobjekt 22 dargestellt. Das graphische Zielobjekt 22 ist dabei indikativ für das bestimmte Navigationsziel. Ein graphischer Pfad 26, bevorzugt ein linearer Pfad, verbindet das graphische Fahrzeugobjekt 21 mit dem graphischen Zielobjekt 22. In dieser Ausführungsform der Erfindung wird ferner ein, beziehungsweise mindestens ein, graphisches Tankstellenobjekt 24 indikativ für den mindestens einen bestimmten Tankzwischenstopp auf dem graphischen Pfad 26 zwischen dem graphischen Fahrzeugobjekt 21 und dem graphischen Zielobjekt 22 dargestellt. Wenn beispielsweise eine längere Strecke zu fahren ist, so können entsprechend auch mehrere Tankzwischenstopps in die Bestimmung der Navigationsroute einbezogen werden, wie in der Figur 2 gezeigt. Die Bestimmung der jeweiligen Tankstelle kann dabei basierend auf einer Marke und/oder basierend auf dem Kraftstoffpreis erfolgen. Ferner kann die Bestimmung auf Basis von Verpflegungsmöglichkeiten, zum Beispiel Essmöglichkeiten, erfolgen.

Weiterhin kann ein Reichweitenindikator 28 dargestellt werden, welcher sich von dem graphischen Fahrzeugobjekt 21 entlang des graphischen Pfads 26 erstreckt. Dessen Endpunkt kennzeichnet die ermittelte Reichweite. Dieser kann auch in allen folgenden Ausführungen bereitgestellt werden. Die Positionierung des oder der graphischen Tankstellenobjekte 24 kann dabei maßstabsgetreu entlang des graphischen Pfads 26 erfolgen. Dadurch können für den Fahrer Abstände zu den Zwischenstopps abgeschätzt werden. Die Anzeige verbessert ferner die Wahrnehmung der Fahrstreckenführung für den Fahrer während der Fahrt.

In einer Ausführungsform der Erfindung erfolgt das Bestimmen der ersten Navigationsroute zum Navigationsziel nur über den mindestens einen ermittelten Tankzwischenstopp. Dadurch wird eine Navigationsroute bereitgestellt, welche ausschließlich Tankstellen berücksichtigt. Eine solche Routenplanung kann beispielsweise auf Basis einer erfassten Eingabe des Benutzers erfolgen, in welcher dieser Betriebsmodus gewählt wird. Ein solcher Modus ist auch einstellbar für Plug-In-Hybride, d.h. wenn das Kraftfahrzeug 100 zusätzlich zum Kraftstofftank 110 eine Batterie 120 für einen Elektroantrieb umfasst, sodass in diesem Modus Ladestationen nicht berücksichtigt werden. Dadurch wird eine besonders zeiteffiziente, d.h. schnelle, Navigationsroute für solche Kraftfahrzeuge bereitgestellt.

In einer Ausführungsform der Erfindung kann ferner eine Fahrtzeit zum Navigationsziel auf Basis der reinen Fahrtzeit und einer Tankzeit an dem oder den bestimmten Tankstopps erfolgen. Eine solche effektive Fahrtzeit kann auf der Fahrstreckenanzeige 20 dargestellt werden. Die Bestimmung dieser effektiven Fahrtzeit wird erst dadurch möglich gemacht, dass die Berechnung der Navigationsroute die erforderlichen Tankstellen einbezieht, d.h. Kenntnis über die erforderlichen Tankstellen erhält.

In bevorzugten Ausführungsformen der Erfindung kann pro Tankstopp eine Zeitkonstante, beispielsweise 10 Minuten angesetzt werden. In anderen Ausführungen kann eine tatsächliche Wartezeit an der Tankstelle an das Kraftfahrzeug übermittelt werden und von der Vorrichtung 10 in die Berechnung der Fahrtzeit einbezogen werden.

Die Figur 3 illustriert das Verfahren zur Reichweitenkontrolle nach einer zweiten Ausführungsform der Erfindung. Im Folgenden werden nur Unterschiede zur Figur 2 erklärt. Für Gemeinsamkeiten wird auf die vorhergehende Beschreibung verwiesen.

Für diese Ausführungsform ist es erforderlich, dass das Kraftfahrzeug 100 zusätzlich zum Kraftstofftank 110 eine Batterie 120 für den Elektroantrieb umfasst, welche geladen werden kann wie es in Figur 1 dargestellt ist. Das Kraftfahrzeug 100 kann somit ein Plug-in-Hybrid sein.

Das Verfahren umfasst hierbei ferner das Bestimmen einer zweiten Reichweite. Die zweite Reichweite kann auf Basis des Ladezustands der Batterie 120 ermittelt werden. Zusätzliche Informationen, welche die aktuelle Entladegeschwindigkeit ermitteln, können ferner bereitgestellt werden, um die zweite Reichweite zu bestimmen. Die zweite Reichweite kann somit unabhängig von der ersten Reichweite bestimmt werden. Auch hier kann zeitkontinuierlich oder in bestimmten Abständen die Entladegeschwindigkeit berücksichtigt werden.

Basierend auf der zweiten Reichweite und der Strecke zum Navigationsziel kann mindestens ein Ladezwischenstopp ermittelt werden. Bevorzugt erfolgt dies, wenn die zweite Reichweite geringer ist als die Strecke zum Navigationsziel. Dies kann, wie zuvor beschrieben, durch die Steuereinheit 14 erfolgen. In dieser Ausführung können somit sowohl Ladestopps als auch Tankstopps von der Vorrichtung 10 zur Navigationsroutenbestimmung verwendet werden.

In dieser Ausführungsform wird die erste Navigationsroute zum Navigationsziel über den mindestens einen ermittelten Tankzwischenstopp und ferner über den mindestens einen ermittelten Ladezwischenstopp bestimmt. Dadurch wird automatisch eine Navigationsroute bereitgestellt, bei welcher stets der Kraftstofftank 110 und auch die Batterie 120 zum Antrieb genutzt werden können. Der Plug-In-Hybrid kann somit mit hohem elektrischem Anteil mittels der bestimmten Navigationsroute betrieben werden.

In dieser Ausführung, wie in der Figur 3 gezeigt, kann das Darstellen der ersten Fahrstreckenanzeige 20 auf dem Display 16 zusätzlich mit mindestens einem graphischen Ladestationsobjekt 25 erfolgen, welches indikativ ist für den ermittelten mindestens einen Ladezwischenstopp auf dem graphischen Pfad 26 zwischen dem graphischen Fahrzeugobjekt 21 und dem graphischen Zielobjekt 22. Wie in der Figur 2 gezeigt, sind mehrere Ladestationen ermittelt worden, um mit geladener Batterie bis zum Navigationsziel zu kommen. Auch diese Ausführungsform, also das Berücksichtigen von Ladestopps und Tankstopps, kann durch Erfassen einer Benutzereingabe erfolgen, in welcher dieser Betriebsmodus gewählt wird. Die Berücksichtigung der Ladesäulen in die Navigationsroutenplanung ermöglicht es, den elektrischen Fahranteil zu erhöhen.

Auch in diesem Fall kann eine effektive Fahrtzeit zum Navigationsziel auf Basis der reinen Fahrtzeit, einer Tankzeit und Ladezeit pro Stopp erfolgen und wie oben beschrieben angezeigt werden.

In bevorzugten Ausführungsformen der Erfindung kann pro Ladestopp eine Zeitkonstante, beispielsweise 30 Minuten angesetzt werden. In anderen Ausführungen kann eine tatsächliche Wartezeit an der Ladesäule an das Kraftfahrzeug übermittelt werden und von der Vorrichtung 10 in die Berechnung der effektiven Fahrtzeit einbezogen werden. Auch hier kann die Ladesäule auf Basis von Preis und/oder Marke bestimmt werden. Ferner kann die Bestimmung auf Basis von Verpflegungsmöglichkeiten erfolgen.

In weiteren Ausführungsformen kann ferner eingestellt werden, ob Ladestationen oder Tankstellen bevorzugt werden sollen. In einem solchen Modus kann somit eine Priorität gesetzt werden für Ladestationen oder für Tankstellen und die Bestimmung der Navigationsroute danach ausgerichtet werden. Dies schließt auch ein, dass Einstellungen erfasst werden können, nach denen ausschließlich Ladestationen oder Tankstellen eingeplant werden.

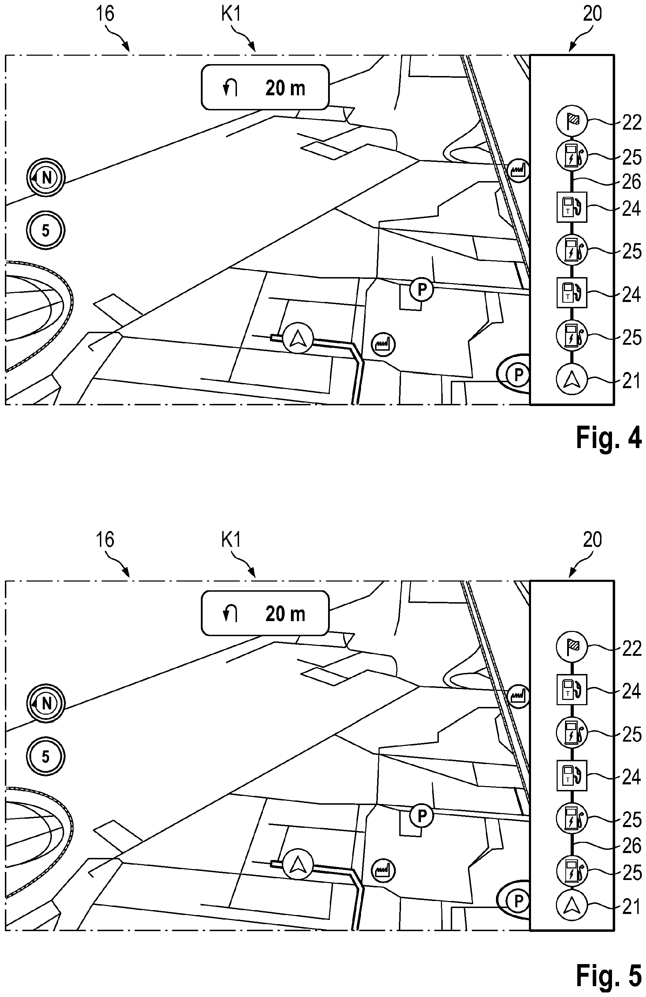

Die Figur 4 illustriert das Verfahren zur Reichweitenkontrolle nach einer dritten Ausführungsform der Erfindung, welche nicht von den Ansprüchen abgedeckt ist. Im Folgenden werden nur Unterschiede zu den vorigen Ausführungsformen erklärt. Für Gemeinsamkeiten wird auf die gesamte vorhergehende Beschreibung verwiesen.

In dieser Ausführung erfolgt das Bestimmen der ersten Navigationsroute über den mindestens einen ermittelten Tankzwischenstopp und einen zusätzlichen Ladezwischenstopp. Der zusätzliche Ladezwischenstopp ist dabei der letzte Zwischenstopp der ersten Navigationsroute vor dem Navigationsziel. Der zusätzliche Ladezwischenstopp ist in der Figur 4 als Ladestationsobjekt 25 kurz vor dem Zielobjekt 22 angezeigt. Somit kann kurz vor Ankunft die Batterie wieder voll aufgeladen werden. Beispielsweise kann die Ladestation in der Nähe der Heimatadresse gesucht werden. Das Bestimmen einer Ladesäule kann auch auf Basis eines Fahrprofils erfolgen. In Folgefahrten kann somit der elektrische Anteil bei Plug-in-Hybriden erhöht werden, da eine vollgeladene Batterie 120 bereitsteht.

Die Figur 5 illustriert das Verfahren zur Reichweitenkontrolle nach einer vierten Ausführungsform der Erfindung, welche nicht von den Ansprüchen abgedeckt ist. Im Folgenden werden nur Unterschiede zu den vorigen Ausführungsformen erklärt. Für Gemeinsamkeiten wird auf die gesamte vorhergehende Beschreibung verwiesen.

In dieser Ausführungsform wird eine Benutzereingabe indikativ für eine Auswahl eines Tankzwischenstopps oder eines Ladezwischenstopps als nächsten Zwischenstopp erfasst. Dies kann über eine Schnittstelle der Vorrichtung 10 erfolgen, beispielsweise über das Display 16 selbst, zum Beispiel über die Fahrstreckenanzeigen. Das Bestimmen der ersten Navigationsroute erfolgt dann über den mindestens einen ermittelten Tankzwischenstopp und den erfassten Tankzwischenstopp oder Ladezwischenstopp als nächsten Zwischenstopp.

In der vorliegenden Figur ist beispielsweise ein Ladezwischenstopp als nächster Zwischenstopp als Benutzereingabe erfasst worden, welcher zur Berechnung der ersten Navigationsroute herangezogen wurde. Dadurch kann der Benutzer aktiv Lade- und Tankstopps für die Navigationsroutenberechnung hinzufügen und aktiv kontrollieren. Beispielsweise kann er so, wenn zum Beispiel nur Tankstopps eingeplant waren gemäß Figur 1, in den elektrischen Betrieb übergehen, in dem er eine nächstgelegene Ladestation anfährt, die Batterie lädt und elektrisch fährt. Dadurch kann der elektrische Fahranteil erhöht werden. Auch kann im umgekehrten Fall, wenn elektrisch gefahren wird, eine Tankstelle mittels der Navigationsroute angefahren werden, um dann mit Kraftstoff über eine längere Strecke fahren zu können. Dies kann zu einer Fahrzeitminimierung verwendet werden.

Die Einstellungen können in einem Systemsetup erfolgen oder mit einem Schalter an der Fahrstreckenanzeige 20 selbst.

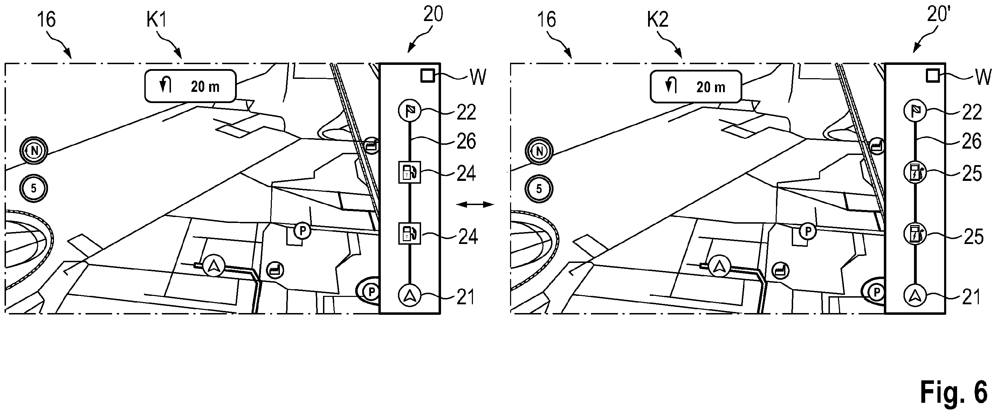

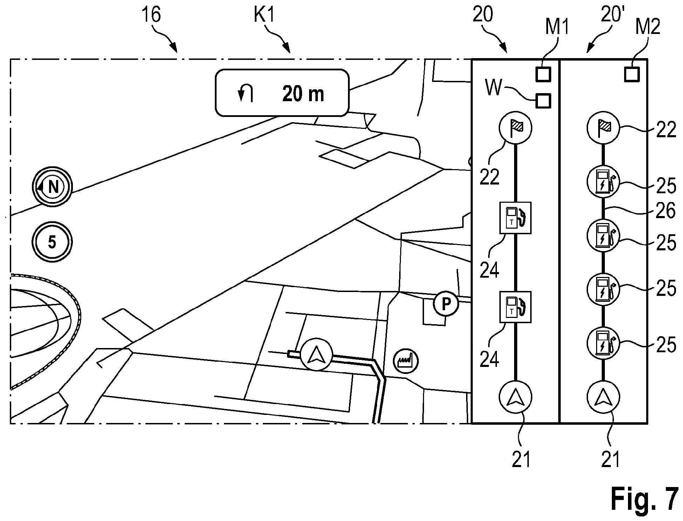

Figur 6 und Figur 7 illustrieren Verfahren zur Reichweitenkontrolle nach einer fünften und sechsten Ausführungsform der Erfindung. Im Folgenden werden nur Unterschiede zu den vorigen Ausführungsformen erklärt. Für Gemeinsamkeiten wird auf die gesamte vorhergehende Beschreibung verwiesen.

In diesen Ausführungsformen der Erfindung wird eine zweite Navigationsroute zum Navigationsziel über mindestens einen ermittelten Ladezwischenstopp bestimmt. Ferner kann eine zweite graphische Fahrstreckenanzeige 20' auf dem Display 16 dargestellt werden. Die Fahrstreckenanzeige 20' ist dabei analog zu der ersten Fahrstreckenanzeige 20 aufgebaut. Sie umfasst ein graphisches Ladestationsobjekt 25 indikativ für den Ladezwischenstopp auf dem graphischen Pfad 26 zwischen dem graphischen Zielobjekt 22 und dem graphischen Fahrzeugobjekt 21.

Das Bestimmen der zweiten Navigationsroute zum Navigationsziel erfolgt nur über mindestens einen ermittelten Ladezwischenstopp. Damit ist die zweite Navigationsoute eine ökologische Route, auf welcher mit höherem elektrischem Anteil gefahren werden kann. Die erste Navigationsroute umfasst nur Tankstopps.. In weiteren Ausführungen der Erfindung kann eine Auswahl von Navigationsrouten gemäß Betriebsmodi, zum Beispiel schnell beziehungsweise kurz und ökologisch, oder elektrisch oder mittels Kraftstoff, erfolgen.

In dem Verfahren nach Figur 6 kann eine Navigationsroutenauswahl aus der ersten und zweiten Navigationsroute durch den Benutzer erfolgen. Dazu kann beispielsweise ein Schaltelement W auf den Fahrstreckenanzeigen 20, 20' als Schnittstelle bereitgestellt sein. Alternativ kann eine solche Auswahl in einem Setup vorgenommen werden. In Antwort auf die erfasste Auswahl des Nutzers erfolgt dann das Anzeigen nur einer der ersten und zweiten Fahrstreckenanzeigen 20, 20', welche zu der ausgewählten Navigationsroute korrespondiert. Diese Auswahlmöglichkeit ist in der Figur 6 dargestellt. Dabei wechselt durch die Auswahl des Benutzers auch eine erste Kartenansicht K1 zu einer zweiten Kartenansicht K2 korrespondierend zu der ausgewählten Navigationsroute.

Diese mehrfache Navigationsberechnung ermöglicht es dem Fahrer, zwischen den Routen nach seinen Präferenzen zu wählen. Auch dadurch kann der Benutzer jederzeit in einen Modus wechseln, in welchem er mit höherem elektrischen Anteil fahren kann. Die zweite Navigationsroute, rechts in der Figur, ist eine Navigationsroute mit nur Ladestopps als Zwischenstopp. Die erste Navigationsroute, links in der Figur, ist eine Navigationsroute mit nur Tankstopps. Der Benutzer kann somit zwischen diesen beiden Grenzfällen wechseln, und kann so den Betrieb des Fahrzeugs nach seinen Präferenzen gestalten, beispielsweise hinsichtlich eines ökologischen Fahrbetriebs.

Die zweite Navigationsroute umfasst nur mindestens einen Ladestopp, wohingegen für die erste Navigationsroute nur Tankzwischenstopps bestimmt werden. Multistopproutenplanung wird somit für die zweite Navigationsroute nur für elektrisches Laden ausgeführt. Auch hierzu kann es einen Einstellungsbereich geben oder über das Schaltelement W der Fahrstreckenanzeigen 20, 20' erfolgen, in welchen zwischen den beiden Anzeigen und beiden Zielführungen umgeschaltet werden kann.

Figur 7 zeigt eine Ausführungsform in welcher das Verfahren das gemeinsame Darstellen der ersten Fahrstreckenanzeige 20 und der zweiten Fahrstreckenanzeige 20' umfasst. Dadurch können die beiden Navigationsrouten, beispielsweise eine mit nur Ladestopps und die andere mit nur Tankstopps wie in der Figur 7 gezeigt oder mit gemischten Stopps, direkt miteinander verglichen werden. Beispielsweise können die Fahrkilometer oder die bestimmte effektive Fahrtzeit, wie oben beschrieben, als Vergleichsparameter dem Benutzer eine Wahl nach seinen Präferenzen für die konkrete Fahrt ermöglichen. In Antwort auf das Erfassen der Navigationsroutenauswahl aus der ersten und zweiten Navigationsroute des Benutzers erfolgt dann das Anzeigen nur einer Kartenansicht K1, K2 auf dem Display 16, welche zu der ausgewählten Navigationsroute korrespondiert. Beispielsweise ist hier die erste Navigationsroute gewählt und somit entsprechend die erste Kartenansicht K1 gezeigt.

Die gezeigte Kartenansicht K1, K2 kann durch ein Markierfeld M1, M2 angezeigt werden. Es kann beispielsweise das Aktivieren eines Markierfeldes M1, M2 aus der Gruppe eines ersten und eines zweiten Markierfelds M1, M2 erfolgen, welches auf der Fahrstreckenanzeige 20, 20' korrespondierend zu der ausgewählten Navigationsroute positioniert oder dieser zugeordnet ist. Beispielsweise würde in dem vorliegenden Fall das erste Markierfeld M1 aktiviert sein. Dadurch wird beim parallelen Anzeigen mehr Übersicht gewährt.

Die Erfindung stellt ein Reichweitenmanagement für Kraftfahrzeuge mit Verbrennungsantrieb oder zusätzlichem Elektroantrieb zur Verfügung, welches unter Anderem geeignet ist, die Reichweitenkontrolle für den Fahrer zu erleichtern, den elektrischen Fahranteil zu erhöhen und Informationen intuitiv und eingängig an den Fahrer bzw. Benutzer zum Betrieb des Kraftfahrzeugs zu übermitteln.

### Bezugszeichenliste

- 10: Vorrichtung zur Reichweitenkontrolle

- 11: erster Sensor
- 12: zweiter Sensor
- 14: Steuereinheit
- 16: Display

- 20: erste Fahrstreckenanzeige
- 20': zweite Fahrstreckenanzeige
- 21: graphisches Fahrzeugobjekt
- 22: graphisches Zielobjekt

- 24: graphisches Tankstellenobjekt
- 25: graphisches Ladestationsobjekt

- 26: graphischer Pfad

- 28: Reichweitenindikator

- 100: Kraftfahrzeug
- 110: Kraftstofftank
- 115: Verbrennungsmotor
- 120: Batterie
- 125: Elektromotor

- K1: erste Kartenansicht
- K2: zweite Kartenansicht

- W: Schaltelement

- M1, M2: Markierfeld

## Patentansprüche

1. Verfahren zur Reichweitenkontrolle für ein Kraftfahrzeug (100) mit einem Verbrennungsantrieb und einem Elektroantrieb, umfassend:
- Erfassen eines Navigationsziels;
- Bestimmen einer ersten Reichweite auf Basis einer Kraftstoffmenge in einem Kraftstofftank (110) für den Verbrennungsantrieb;
- Ermitteln mindestens eines Tankzwischenstopps basierend auf der ersten Reichweite und einer Strecke zum Navigationsziel;
- Bestimmen einer ersten Navigationsroute zum Navigationsziel über den mindestens einen ermittelten Tankzwischenstopp und nicht über einen Ladezwischenstopp;
- Bestimmen einer zweiten Reichweite auf Basis eines Ladezustands einer Batterie (120) für den Elektroantrieb,
- Ermitteln mindestens eines Ladezwischenstopps basierend auf der zweiten Reichweite und der Strecke zum Navigationsziel,
- Bestimmen einer zweiten Navigationsroute zum Navigationsziel über mindestens einen ermittelten Ladezwischenstopp und nicht über einen Tankzwischenstopp, **gekennzeichnet durch**,
- gemeinsames Darstellen einer ersten Fahrstreckenanzeige (20) und einer zweiten Fahrstreckenanzeige (20') auf einem Display (16),
wobei die erste Fahrstreckenanzeige (20) mindestens ein graphisches Tankstellenobjekt (24) indikativ für den mindestens einen bestimmten Tankzwischenstopp auf einem graphischen Pfad (26) zwischen einem graphischen Fahrzeugobjekt (21) und einem graphischen Zielobjekt (22) umfasst, und
wobei die zweite graphische Fahrstreckenanzeige (20') mindestens ein graphisches Ladestationsobjekt (25) indikativ für den mindestens Ladezwischenstopp auf dem graphischen Pfad (26) zwischen dem graphischen Zielobjekt (22) und dem Fahrzeugobjekt (21) umfasst, und
- in Antwort auf das Erfassen einer Navigationsroutenauswahl zum Wechseln zwischen der ersten und zweiten Navigationsroute des Benutzers, Anzeigen nur einer Kartenansicht (K1, K2) auf dem Display (16), welche zu der ausgewählten Navigationsroute korrespondiert.

2. Verfahren nach Anspruch 1, **gekennzeichnet durch** das Erfassen einer Benutzereingabe indikativ für eine Auswahl eines Tankzwischenstopps oder eines Ladezwischenstopps als nächsten Zwischenstopp, und das Bestimmen der ersten Navigationsroute über den mindestens einen ermittelten Tankzwischenstopp und des erfassten Tankzwischenstopps oder Ladezwischenstopps als nächsten Zwischenstopp.

3. Verfahren nach Anspruch 1, **gekennzeichnet durch** das Aktivieren eines Markierfeldes (M1, M2) aus der Gruppe eines ersten und eines zweiten Markierfelds (M1, M2), welches auf der Fahrstreckenanzeige (20, 20') korrespondierend zu der ausgewählten Navigationsroute positioniert oder dieser zugeordnet ist.

4. Verfahren zur Reichweitenkontrolle für ein Kraftfahrzeug (100) mit einem Verbrennungsantrieb und einem Elektroantrieb, umfassend:
- Erfassen eines Navigationsziels;
- Bestimmen einer ersten Reichweite auf Basis einer Kraftstoffmenge in einem Kraftstofftank (110) für den Verbrennungsantrieb;
- Ermitteln mindestens eines Tankzwischenstopps basierend auf der ersten Reichweite und einer Strecke zum Navigationsziel;
- Bestimmen einer ersten Navigationsroute zum Navigationsziel über den mindestens einen ermittelten Tankzwischenstopp und nicht über einen Ladezwischenstopp;
- Bestimmen einer zweiten Reichweite auf Basis eines Ladezustands einer Batterie (120) für den Elektroantrieb,
- Ermitteln mindestens eines Ladezwischenstopps basierend auf der zweiten Reichweite und der Strecke zum Navigationsziel,
- Bestimmen einer zweiten Navigationsroute zum Navigationsziel über mindestens einen ermittelten Ladezwischenstopp und nicht über einen Tankzwischenstopp, **gekennzeichnet durch**,
- Darstellen einer ersten Fahrstreckenanzeige (20) oder einer zweiten Fahrstreckenanzeige (20') auf einem Display (16),
wobei die erste Fahrstreckenanzeige (20) mindestens ein graphisches Tankstellenobjekt (24) indikativ für den mindestens einen bestimmten Tankzwischenstopp auf einem graphischen Pfad (26) zwischen einem graphischen Fahrzeugobjekt (21) und einem graphischen Zielobjekt (22) umfasst, und
wobei die zweite graphische Fahrstreckenanzeige (20') mindestens ein graphisches Ladestationsobjekt (25) indikativ für den mindestens Ladezwischenstopp auf dem graphischen Pfad (26) zwischen dem graphischen Zielobjekt (22) und dem Fahrzeugobjekt (21) umfasst, und
- in Antwort auf das Erfassen einer Navigationsroutenauswahl zum Wechseln zwischen der ersten und zweiten Navigationsroute des Benutzers, Anzeigen nur einer Kartenansicht (K1, K2) und nur einer der ersten und zweiten Fahrstreckenanzeigen (20, 20') auf dem Display (16), welche zu der ausgewählten Navigationsroute korrespondieren.

5. Verfahren nach einem der Ansprüche 1 bis 4, **gekennzeichnet durch** das Bestimmen einer Fahrtzeit zum Navigationsziel auf Basis der reinen Fahrtzeit und einer Tankzeit und/oder Ladezeit an dem mindestens einen Tankzwischenstopp und/oder mindestens einen Ladezwischenstopp, und Darstellen der Fahrtzeit neben oder auf der ersten und/oder zweiten Fahrstreckenanzeige (20, 20').

6. Vorrichtung (10) zur Reichweitenkontrolle für ein Kraftfahrzeug (100) mit einem Verbrennungsantrieb, wobei die Vorrichtung (10) dazu eingerichtet ist, das Verfahren gemäß einem der Ansprüche 1 bis 5 auszuführen.

## Claims

1. Method for range control of a motor vehicle (100) having a combustion engine and an electric drive, comprising:
- detecting a navigation destination;
- determining a first range based on an amount of fuel in a fuel tank (110) for the combustion engine;
- identifying at least one refueling stop based on the first range and a route to the navigation destination;
- determining a first navigation route to the navigation destination via the at least one identified refueling stop and not via a charging stop;
- determining a second range based on a state of charge of a battery (120) for the electric drive,
- identifying at least one charging stop based on the second range and the route to the navigation destination,
- determining a second navigation route to the navigation destination via at least one identified charging stop and not via a refueling stop, **characterized by,**
- jointly showing a first route display (20) and a second route display (20') on a display (16),
the first route display (20) comprising at least one graphical filling station object (24) indicative of the at least one determined refueling stop on a graphical path (26) between a graphical vehicle object (21) and a graphical target object (22), and
the second graphical route display (20') comprising at least one graphical charging station object (25) indicative of the at least one charging stop on the graphical path (26) between the graphical target object (22) and the vehicle object (21), and
- in response to the detection of a navigation route selection for switching between the user's first and second navigation routes, displaying only one map view (K1, K2) on the display (16), which corresponds to the selected navigation route.

2. Method according to claim 1, **characterized by** detecting a user input indicative of a selection of a refueling stop or a charging stop as the next stop, and determining the first navigation route via the at least one identified refueling stop and the detected refueling stop or charging stop as the next stop.

3. Method according to claim 1, **characterized by** marking a check box (M1, M2) from the group of a first and a second check box (M1, M2), which is positioned on the route display (20, 20') corresponding to the selected navigation route or is assigned thereto.

4. Method for range control of a motor vehicle (100) having a combustion engine and an electric drive, comprising:
- detecting a navigation destination;
- determining a first range based on an amount of fuel in a fuel tank (110) for the combustion engine;
- identifying at least one refueling stop based on the first range and a route to the navigation destination;
- determining a first navigation route to the navigation destination via the at least one identified refueling stop and not via a charging stop;
- determining a second range based on a state of charge of a battery (120) for the electric drive,
- identifying at least one charging stop based on the second range and the route to the navigation destination,
- determining a second navigation route to the navigation destination via at least one identified charging stop and not via a refueling stop, **characterized by,**
- showing a first route display (20) or a second route display (20') on a display (16),
the first route display (20) comprising at least one graphical filling station object (24) indicative of the at least one determined refueling stop on a graphical path (26) between a graphical vehicle object (21) and a graphical target object (22), and
the second graphical route display (20') comprising at least one graphical charging station object (25) indicative of the at least one charging stop on the graphical path (26) between the graphical target object (22) and the vehicle object (21), and
- in response to detecting a navigation route selection for switching between the user's first and second navigation routes, displaying only one map view (K1, K2) and only one of the first and second route displays (20, 20') on the display (16), which correspond to the selected navigation route.

5. Method according to any of claims 1 to 4, **characterized by** determining a travel time to the navigation destination based on the pure travel time and a refueling time and/or charging time at the at least one refueling stop and/or at least one charging stop, and displaying the travel time next to or on the first and/or second route display (20, 20').

6. Device (10) for range control of a motor vehicle (100) having a combustion engine, wherein the device (10) is designed to carry out the method according to any of claims 1 to 5.

## Revendications

1. Procédé permettant le contrôle d'autonomie pour un véhicule automobile (100) comportant un entraînement à combustion interne et un entraînement électrique, comprenant :
- la saisie d'une destination de navigation ;
- la détermination d'une première autonomie sur la base d'une quantité de carburant dans un réservoir à carburant (110) pour l'entraînement à combustion interne ;
- la définition d'au moins un arrêt intermédiaire de ravitaillement en carburant sur la base de la première autonomie et d'une distance jusqu'à la destination de navigation ;
- la détermination d'un premier itinéraire de navigation vers la destination de navigation en passant par l'au moins un arrêt intermédiaire de ravitaillement en carburant déterminé et non par un arrêt intermédiaire de chargement ;
- la détermination d'une seconde autonomie sur la base d'un état de chargement d'une batterie (120) pour l'entraînement électrique,
- la définition d'au moins un arrêt intermédiaire de chargement sur la base de la seconde autonomie et de la distance jusqu'à la destination de navigation,
- détermination d'un second itinéraire de navigation vers la destination de navigation en passant par au moins un arrêt intermédiaire de chargement défini et non par un arrêt intermédiaire de ravitaillement en carburant, **caractérisé par,**
- la représentation commune d'un premier affichage de distance à parcourir (20) et d'un second affichage de distance à parcourir (20') sur un écran d'affichage (16),
dans lequel le premier affichage de distance à parcourir (20) comprend au moins un objet graphique de station-service (24) indicatif de l'au moins un arrêt intermédiaire de ravitaillement en carburant déterminé sur un chemin graphique (26) entre un objet de véhicule (21) graphique et un objet graphique de destination (22), et dans lequel le second affichage de distance à parcourir (20') graphique comprend au moins un objet graphique de station de chargement (25) indicatif de l'au moins un arrêt intermédiaire de chargement sur le chemin graphique (26) entre l'objet graphique de destination (22) et l'objet de véhicule (21), et
- en réponse à la saisie d'une sélection d'itinéraire de navigation pour la commutation entre le premier et le second itinéraire de navigation de l'utilisateur, l'affichage sur l'écran d'affichage (16) d'une vue cartographique (K1, K2) uniquement, laquelle correspond à l'itinéraire de navigation sélectionné.

2. Procédé selon la revendication 1, **caractérisé par** la saisie d'une entrée utilisateur indicative d'une sélection d'un arrêt intermédiaire de ravitaillement en carburant ou d'un arrêt intermédiaire de chargement en tant que prochain arrêt intermédiaire, et la détermination du premier itinéraire de navigation passant par l'au moins un arrêt intermédiaire de ravitaillement en carburant défini et de l'arrêt intermédiaire de ravitaillement en carburant ou arrêt intermédiaire de chargement saisi en tant que prochain arrêt intermédiaire.

3. Procédé selon la revendication 1, **caractérisé par** l'activation d'un champ de marquage (M1, M2) parmi le groupe constitué d'un premier et d'un second champ de marquage (M1, M2), lequel est positionné sur l'affichage de distance à parcourir (20, 20') en correspondance avec l'itinéraire de navigation sélectionné ou est associé à celui-ci.

4. Procédé permettant le contrôle d'autonomie pour un véhicule automobile (100) comportant un entraînement à combustion interne et un entraînement électrique, comprenant :
- la saisie d'une destination de navigation ;
- la détermination d'une première autonomie sur la base d'une quantité de carburant dans un réservoir à carburant (110) pour l'entraînement à combustion interne ;
- la définition d'au moins un arrêt intermédiaire de ravitaillement en carburant sur la base de la première autonomie et d'une distance jusqu'à la destination de navigation ;
- la détermination d'un premier itinéraire de navigation vers la destination de navigation en passant par l'au moins un arrêt intermédiaire de ravitaillement en carburant déterminé et non par un arrêt intermédiaire de chargement ;
- la détermination d'une seconde autonomie sur la base d'un état de chargement d'une batterie (120) pour l'entraînement électrique,
- la définition d'au moins un arrêt intermédiaire de chargement sur la base de la seconde autonomie et de la distance jusqu'à la destination de navigation,
- détermination d'un second itinéraire de navigation vers la destination de navigation en passant par au moins un arrêt intermédiaire de chargement défini et non par un arrêt intermédiaire de ravitaillement en carburant, **caractérisé par,**
- la représentation d'un premier affichage de distance à parcourir (20) ou d'un second affichage de distance à parcourir (20') sur un écran d'affichage (16),
dans lequel le premier affichage de distance à parcourir (20) comprend au moins un objet graphique de station-service (24) indicatif de l'au moins un arrêt intermédiaire de ravitaillement en carburant déterminé sur un chemin graphique (26) entre un objet de véhicule (21) graphique et un objet graphique de destination (22), et dans lequel le second affichage de distance à parcourir (20') graphique comprend au moins un objet graphique de station de chargement (25) indicatif de l'au moins un arrêt intermédiaire de chargement sur le chemin graphique (26) entre l'objet graphique de destination (22) et l'objet de véhicule (21), et
- en réponse à la saisie d'une sélection d'itinéraire de navigation pour la commutation entre le premier et le second itinéraire de navigation de l'utilisateur, l'affichage sur l'écran d'affichage (16) d'une vue cartographique (K1, K2) uniquement, et d'un affichage de distance à parcourir (20, 20') uniquement parmi le premier et le second affichage de distance à parcourir, lesquels correspondent à l'itinéraire de navigation sélectionné.

5. Procédé selon l'une des revendications 1 à 4, **caractérisé par** la détermination d'un temps de parcours jusqu'à la destination de navigation sur la base du temps de parcours seul et d'un temps de ravitaillement en carburant et/ou d'un temps de chargement au niveau de l'au moins un arrêt intermédiaire de ravitaillement en carburant et/ou de l'au moins un arrêt intermédiaire de chargement, et la représentation du temps de parcours à côté du premier et/ou du second affichage de distance à parcourir (20, 20'), ou sur ceux-ci.

6. Dispositif (10) permettant le contrôle d'autonomie pour un véhicule automobile (100) comportant un entraînement à combustion interne, dans lequel le dispositif (10) est configuré pour mettre en œuvre le procédé selon l'une des revendications 1 à 5.
